# EUROPEAN PATENT SPECIFICATION

(11) **EP 1 432 197 B1**
(45) Date of publication and mention of the grant of the patent: **08.08.2007**
(21) Application number: 02293155.4
(22) Date of filing: 19.12.2002
(51) Int. Cl.: H04L 29/06, H04L 12/24

(54) **Configuration of network elements**
Konfiguration von Netzwerkelementen
Configuration d'éléments de réseau

(43) Date of publication of application: 23.06.2004
(73) Proprietor: Alcatel Lucent, 75008 Paris (FR)
(72) Inventor: Trappeniers, Lieven Leopold Albertine, 2200 Herentals (Noorderwijk) (BE); Siebelink, Rudolf Henri Adriaan, 2600 Antwerp (BE); Holwerda, Harald Einte, 2274 VX Voorburg (NL)
(74) Representative: Narmon, Gisèle Marie Thérèse

(56) References cited:
- EP-A- 1 265 414
- WO-A-02/15462

## Description

The invention relates to a method for communication between a terminal and a service-providing-server or another terminal via an access system providing access to a network, wherein the terminal is coupled to a coupling interface able to communicate with the access system by means of protocol couplings, said method comprising the steps of
(a) at said terminal, generating a service-selection-signal and transmitting said service-selection-signal from said terminal to a service-selection-server, and
(b) at said service-selection-server, in dependence of a service-definition-signal , obtained by said service-selection-server, generating a configuration-signal and transmitting said configuration-signal to said access system for configuring at least parts of said access system and at least parts of said couplings.

For example in case of a video-on-demand service, said providing-server for example corresponds with a content provider's server, and for example in case of an audio/video call or a voice-over-internet-protocol call, said providing-server for example corresponds with an other terminal etc. Said terminal for example corresponds with a personal computer etc. and said coupling-interface for example corresponds with a Digital-Subscriber-Line-Access-Multiplexer etc. and said access system for example corresponds with a Broadband-Remote-Access-Server etc.

By performing step (a), a user at the terminal has got the option of selecting one out of many services, like for example surfing the web, making a telephone call, ordering pay-tv-channels etc. Then, with step (b), parts of the access system, like for example modems, filters, (de)modulators, (de)converters etc. and parts of packet-switched-couplings like for example Asynchronous-Transfer-Mode-Pipes, Multi-Protocol-Label-Switching pipes, Internet-Protocol-couplings etc. are configured to be in conformance with said service-definition-signal. Thereby, said configuration-signal may correspond with said service-definition-signal or not and may comprise parts of said service-definition-signal or not.

A prior art method is known from EP 1 265 414 A1, which discloses the configuring of network elements based on network policies. Per service to be delivered, one or more network policies are defined.

The known method is disadvantageous, inter alia, owing to the fact that it is dynamical and efficient to a limited extent.

It is an object of the invention, inter alia, of providing a method as defined in the preamble which is more dynamical and efficient.

The method according to the invention is characterised in that said method further comprises the steps of
(c) at said service-selection-server, generating a service-information-signal and transmitting said service-information-signal to said terminal and/or said coupling-interface to inform about the configurations made in at least parts of the access system and in at least parts of the protocol couplings, which service-information-signal defines a protocol coupling to be used, and
(d) at said terminal and/or said coupling-interface, communicating with said providing-server or said other terminal via at least one coupling defined by at least one service parameter, which communicating comprises an exchange of signals that comprise said at least one service parameter.

By introducing step (c), the terminal and/or the coupling-interface is/are informed through the service-information-signal, which for example defines the coupling etc. to be used. Finally, with step (d), communication takes place via the coupling defined by a service parameter. Said service-selection-server either is coupled to said access system via said network or via said couplings or via another coupling, or forms part of said access system. When forming part of said access system, said service-selection-server may be a separate part of said access system or may be fully integrated with said access system.

By means of said service-selection-signal, said service-definition-signal, said configuring and said service-information-signal, services can be selected dynamically and are specified dynamically (by the service-definition-signal), and the networks are used efficiently (said configuring allows for example couplings etc. to be adapted with respect to bandwidth, delay, jitter, priority etc.), with the service-information-signal being used for informing the terminal and/or the coupling-interface dynamically and for increasing the efficiency of the terminal and/or the coupling-interface. Said couplings may be packet/cell/frame switched couplings and/or Asynchronous Transfer Mode couplings or other couplings etc.

A first embodiment of the method according to the invention is defined by claim 2.

With step (b) comprising the step (b1), the service-selection-server retrieves the service-definition-signal like for example one or more service parameters like for example bandwidth, delay, jitter, priority etc. from a database forming part of said service-selection-server or being near said service-selection-server. In this case said providing-server may correspond with said terminal or said content provider's server etc.

A second embodiment of the method according to the invention is defined by claim 3.

With step (b) comprising the step (b2), the service-selection-server retrieves the service-definition-signal like for example one or more service parameters like for example bandwidth, delay, jitter, priority etc. from said providing-server this time corresponding with the content provider's server etc. Thereby, either said service-selection-signal is forwarded to said providing-server, which in response sends said service-definition-signal to said service-selection-server, or said service-selection-signal is sent to said service-selection-server, which in response consults said providing-server for example by sending a request signal etc.

A third embodiment of the method according to the invention is defined by claim 4.

In case of said coupling-interface being coupled to said access system via a permanent channel, with said step (d1), parts of the terminal like for example modems, filters, (de)modulators, (de)converters etc. and parts of said coupling-interface like for example modems, filters, (de)modulators, (de)converters etc. are configured to be in conformance with said service-definition-signal. Said service parameter can be supplied to said terminal and/or coupling-interface via said service-information-signal. With step (d2), a virtual connection from said coupling-interface to said access system is set up, and with step (d3), a virtual connection from said access system to said providing-server is set up. Said permanent channel for example corresponds with a so-called always-on channel like the D-channel of an Integrated-Service-Digital-Network etc. and may coincide with said couplings or not.

A fourth embodiment of the method according to the invention is defined by claim 5.

In case of said coupling-interface not being coupled to said access system via a permanent channel, with said step (a1), in dependence of said service-selection-signal, a virtual connection from said coupling-interface to said service-selection-server is set up, and with step (a2), parts of said terminal like for example modems, filters, (de)modulators, (de)converters etc. and parts of said coupling-interface like for example modems, filters, (de)modulators, (de)converters etc. are configured to be in conformance with said service-selection-signal (which for example refers to an old service-definition-signal used before or to a predefined service-definition-signal to be used for said setting up etc.). Said service parameter is prestored in said terminal and/or said coupling-interface. With said step (d3), a virtual connection from said access system to said providing-server is set up.

A fifth embodiment of the method according to the invention is defined by claim 6.

With said step (d4), in dependence of said service-information-signal, said parts of said terminal and/or of said coupling-interface can now be re-configured (for example to adapt said old service-definition-signal used before or said predefined service-definition-signal to be used for said setting up etc.).

A sixth embodiment of the method according to the invention is defined by claim 7.

By introducing the billing at said access system of packet-signals (to be) exchanged between said terminal and/or of said coupling-interface on the one hand and said providing-server on the other hand, the dynamic and efficient behaviour will result in dynamic and efficient bills.

The invention also relates to an access system as defined by claim 8, to an access processor program product as defined by claim 9, to a service-selection-server as defined by claim 10, to a service-selection-server program product as defined by claim 11, to a terminal as defined by claim 12, to a terminal processor program product as defined by claim 13, to a coupling-interface as defined by claim 14, to a coupling-interface processor program product as defined by claim 15.

Embodiments of the access system according to the invention and of the access processor program product according to the invention and of the service-selection-server according to the invention and of the service-selection-server program product according to the invention and of the terminal according to the invention and of the terminal processor program product according to the invention and of the coupling-interface according to the invention and of the coupling-interface processor program product according to the invention and of the providing-server according to the invention and of the providing-server processor program product according to the invention correspond with the embodiments of the method according to the invention.

The invention is based upon an insight, inter alia, that prior art services are selected relatively statically and are specified relatively statically, and prior art networks are used relatively inefficiently, and is based upon a basic idea, inter alia, said service-information-signal is to be introduced.

The invention solves the problem, inter alia, of providing a more dynamical and more efficient method, and is advantageous, inter alia, in that services can be selected more dynamically and are specified more dynamically, and the networks are used more efficiently, and the terminal and/or the coupling-interface is/are informed more dynamically and is/are made more efficient.

These and other aspects of the invention will be apparent from and elucidated with reference to the embodiments(s) described hereinafter.
Figure 1 illustrates in block diagram form a system comprising a terminal according to the invention and a coupling-interface according to the invention and an access system according to the invention and a service-selection-server terminal according to the invention and a providing-server terminal according to the invention, and
Figure 2 illustrates in flow chart form a method according to the invention in case of a permanent channel being present between terminal and service-selection-server, and
Figure 3 illustrates in flow chart form a method according to the invention in case of a permanent channel not being present between terminal and service-selection-server.

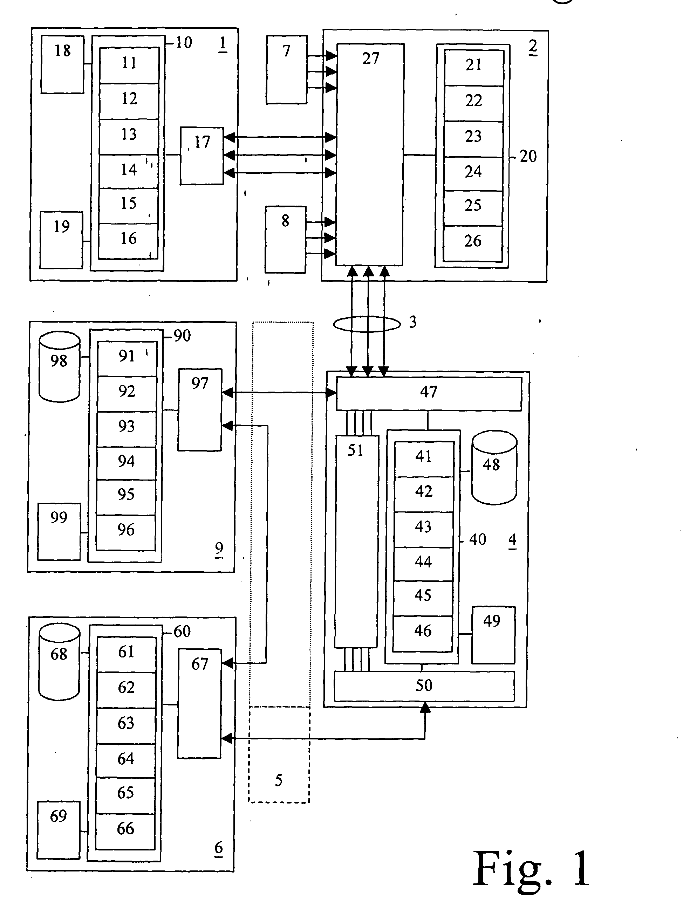

The system shown in Figure 1 like for example a mobile telecommunication system or a fixed telecommunication system etc. comprises terminals 1,7,8 coupled to a coupling-interface 2 which is further coupled via couplings 3 to an access system 4 which is further coupled to a providing-server 6 via a network 5 and to a service-selection-server 9. In case of a mobile situation, at least a part of couplings 3 will be wireless couplings, and in case of a fixed situation, at least a part of couplings 3 will be wired couplings.

Terminal 1 comprises a terminal processor-system 10 coupled to an in/output of a terminal transceiver 17 and to a memory 18 and to a man-machine-interface 19 or mmi 19. Processor-system 10 comprises one or more processors and for example processor-system-parts 11-16, with other and further processor-system-parts not to be excluded, and with each processor-system-part 11-16 being 100% hardware, 100% software or a mixture of both. A further in/output of transceiver 17 is coupled via couplings (wired in case of a wired (home)network or wireless in case of a wireless (home)network) to a coupling-interface transceiver 27 of coupling-interface 2. Coupling-interface transceiver 27 is further coupled to terminals 7 and 8 (possibly being similar tq terminal 1) and to an access tranceiver 47 via couplings 3. Coupling-interface 2 further comprises a coupling-processor-system 20 which comprises one or more processors and for example processor-system-parts 21-26, with other and further processor-system-parts not to be excluded, and with each processor-system-part 21-26 being 100% hardware, 100% software or a mixture of both.

Access system 4 comprises said access tranceiver 47 which is further coupled to service-selection-server 9 and to an access processor-system 40 comprising one or more processors and for example processor-system-parts 41-46, with other and further processor-system-parts not to be excluded, and with each processor-system-part 41-46 being 100% hardware, 100% software or a mixture of both. Access processor-system 40 is further coupled to a memory 48 and to an interface 49. Access system 4 further comprises a switch 50 (or another forwarding module like for example a bridge or a router etc.) coupled to said access processor-system 40 and via a transceiver-switch-interface 51 to said access transceiver 47. Switch 50 is further coupled via a coupling through network 5 to providing-server 6. Alternatively, providing-server 6 may be coupled to access system 4 via access transceiver 47, and/or access transceiver 47 and switch 50 and transceiver-switch-interface 51 may be completely integrated with each other and form one solitary unit.

For example in case of a video-on-demand service, said providing-server 6 for example corresponds with a content provider's server, and for example in case of an audio/video call or a voice-over-internet-protocol call, said providing-server 6 for example corresponds with an other terminal etc. Said terminals 1,7,8 for example correspond each with a personal computer etc. and said coupling-interface 2 for example corresponds with a Digital-Subscriber-Line-Access-Multiplexer etc. and said access system 4 for example corresponds with a Broadband-Remote-Access-Server and parts of couplings 3 for example correspond with Asynchronous-Transfer-Mode-Pipes, Multi-Protocol-Label-Systems, Internet-Protocol-couplings etc.

Providing-server 6 comprises a providing-server processor-system 60 coupled to an in/output of a providing-server transceiver 67 and to a memory 68 and to a man-machine-interface 69 or mmi 69. Processor-system 60 comprises one or more processors and for example processor-system-parts 61-66, with other and further processor-system-parts not to be excluded, and with each processor-system-part 61-66 being 100% hardware, 100% software or a mixture of both. A further in/output of transceiver 67 is coupled via said network 5 to said switch 50, and a yet further in/output of transceiver 67 is coupled to service-selection-server 9.

Service-selection-server 9 comprises a service-selection-server processor-system 90 coupled to an in/output of a service-selection-server transceiver 97 and to a memory 98 and to a man-machine-interface 99 or mmi 99. Processor-system 90 comprises one or more processors and for example processor-system-parts 91-96, with other and further processor-system-parts not to be excluded, and with each processor-system-part 91-96 being 100% hardware, 100% software or a mixture of both. A further in/output of transceiver 97 is coupled to said transceiver 47, and a yet further in/output of transceiver 97 is coupled to said transceiver 67.

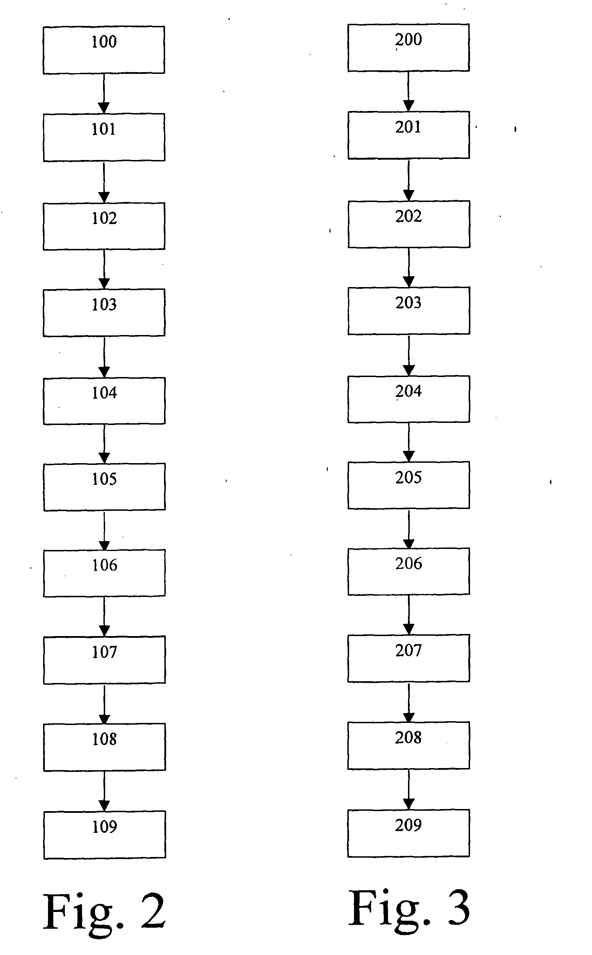

In the method according to the invention shown in Figure 2 in flow chart form for a permanent channel being present between coupling-interface 2 and service-selection-server 9 the blocks have the following meaning:
Block 100 : A user at terminal 1 selects a service via a service-selection-application in terminal 1.
Block 101 : The service-selection-application in terminal 1 informs service-selection-server 9 via the permanent channel.
Block 102 : The service-selection-server 9 consults either its own memory or a third party to be reached via couplings 3 or via network 5.
Block 103 : The service-selection-server 9 retrieves user data originating from terminal 1 and/or from its own memory and/or from memory 48 and/or from another location to be reached via couplings 3 or via network 5 for authentication and/or authorisation purposes.
Block 104 : The service-selection-server 9 configures access system 4 and/or couplings 3 and/or coupling-interface 2 by sending one or more configuration-signals.
Block 105 : The service-selection-server 9 informs the service-selection-application in terminal 1 about the configuration via the permanent channel.
Block 106 : The service-selection-application in terminal 1 informs the Asynchronous-Transfer-Mode-Termination-Point about the configuration.
Block 107 : The Asynchronous-Transfer-Mode-Termination-Point and access system 4 set up one or more virtual connections from terminal 1 to a providing-server 6.
Block 108 : The service-selection-application in terminal 1 acknowledges the establishment to the service-selection-server 9.
Block 109 : Communication between said terminal 1 and said providing-server 6 is billed.

The method according to the invention shown in Figure 2 and in view of the system shown in Figure 1 functions as follows. A user at terminal 1 selects a service via a service-selection-application in terminal 1 and/or coupling-interface 2 (Block 100). This service-selection-application may correspond with for example an application like software running via processor-system 10, or a webpage, or a webpage containing a java applet etc. This service may correspond with for example a video-on-demand service, an audio/video call or a voice-over-internet-protocol call etc. Then the service-selection-application in terminal 1 and/or coupling-interface 2 informs service-selection-server 9 via the permanent channel (Block 101). This service-selection-server 9 may correspond with one of the processors of processor-system 40 or with a separate server coupled to said processor-system 40 (possibly via couplings 3 or network 5) etc. Both blocks 100 and 101 together form step(a) of, at said terminal 1, generating a service-selection-signal and transmitting said service-selection-signal from said terminal 1 to said service-selection-server 9.

The service-selection-server 9 consults either its own memory or a third party located elsewhere (Block 102). This forms step (b1) of, at said service-selection-server 9, in dependence of said service-selection-signal, generating said service-definition-signal, or step (b2) of, at said service-selection-server 9, receiving said service-definition-signal from said providing-server 6 defined by said service-selection-signal, either indirectly via network 5 and access system 4 or directly from providing-server 6 (with said providing-server 6 thereby either being consulted by service-selection-server 9 (via a request signal) or having received for example said service-selection-signal and in response responding with said service-definition-signal). The service-selection-server 9 may further retrieve user data originating from terminal 1 and/or from its own memory and/or from memory 48 and/or from another location for authentication and/or authorisation purposes (Block 103).

Then the service-selection-server 9 configures access system 4 and/or couplings 3 and/or coupling-interface 2 by generating and sending one or more configuration-signals (Block 104). This forms step (b) of, at said service-selection-server 9, in dependence of a service-definition-signal, generating a configuration-signal and transmitting said configuration-signal to said access system 4 for configuring at least parts of said access system 4 and at least parts of said couplings 3 (and/or parts of interface-coupling 2). The service-selection-server 9 informs the service-selection-application in terminal 1 about the configuration via the permanent channel (Block 105). This forms step (c) of, at said service-selection-server 9, generating a service-information-signal and transmitting said service-information-signal to said terminal 1 and/or said coupling-interface 2.

The service-selection-application in terminal 1 may inform the Asynchronous-Transfer-Mode-Termination-Point about the configuration (Block 106). In case of transceiver 17 and/or transceiver 27 comprising an Ethernet modem, the Asynchronous-Transfer-Mode-Layer ends in the modem, and said Asynchronous-Transfer-Mode-Termination-Point corresponds with said modem. In case of said transceiver 17 and/or transceiver 27 comprising a Universal-Serial-Bus-Digital-Subscriber-Line modem, the Asynchronous-Transfer-Mode-Layer ends in the processor-system 10 and/or processor-system 20, and said Asynchronous-Transfer-Mode-Termination-Point corresponds with processor-system 10 and/or processor-system 20.

The Asynchronous-Transfer-Mode-Termination-Point (transceiver 17 and/or 27 and/or processor-system 10 and/or 20) and access system 4 set up one or more virtual connections from terminal 1 and/or coupling-interface 2 via couplings 3 and via access system 4 to providing-server 6 (Block 107), like, in case of a video-on-demand service, a content provider's server, and in case of an audio/video call or a voice-over-internet-protocol call, an other terminal etc. Then the service-selection-application in terminal 1 and/or coupling-interface 2 acknowledges the establishment to the service-selection-server 9 and/or to access system 4 (Block 108). Block 107 possibly together with block 108 form step (d) of, at said terminal 1 and/or coupling-interface 2, communicating with said providing-server 6 via at least one coupling 3 defined by at least one service parameter.

The (packet/cell/frame) signals (to be) exchanged between said terminal 1 and/or coupling-interface 2 and said providing-server 6 are billed (Block 109), which forms step (e).

With the permanent channel being present between coupling-interface 2 and service-selection-server 9, like for example an always-on-channel etc. which may form part of couplings 3 or not, and which may flow via access system 4 or not, step (d) may comprise the steps (d1) of, at said terminal 1 and/or said coupling-interface 2, in dependence of said service-information-signal, configuring parts of said terminal 1 and/or of said coupling interface 2, and (d2) of, at said terminal 1 and/or said coupling-interface 2, setting up a virtual connection from said coupling-interface 2 to said access system 4, and (d3) of, at said access system 4, setting up a virtual connection from said access system 4 to said providing-server 6, and with said service parameter being supplied to said terminal 1 and/or said coupling-interface 2 via said service-information-signal.

By introducing step (a), a user at the terminal 1 has got the option of selecting one out of many services, like for example surfing the web, making a telephone call, ordering pay-tv-channels etc. With step (b), parts of the access system 4, like for example modems, filters, (de)modulators, (de)converters etc. for example located in transceivers 47 and parts of couplings 3 like for example Asynchronous-Transfer-Mode-Pipes, Multi-Protocol-Label-Systems, Internet-Protocol-couplings etc. are configured to be in conformance with said service-definition-signal. By introducing step (c), the terminal 1 and/or the coupling-interface 2 is/are informed through the service-information-signal, which for example defines the coupling 3 etc. to be used. Finally, with step (d), signals for example comprising at least one service parameter are exchanged via the coupling 3 defined by the service parameter.

At the hand of said service-selection-signal, said service-definition-signal, said configuring and said service-information-signal, services can be selected dynamically and are specified dynamically (by the service-definition-signal), and the networks are used efficiently (said configuring allows for example couplings 3 etc. to be adapted with respect to bandwidth, delay, jitter, priority etc.), with the service-information-signal being used for informing the terminal 1 and/or the coupling-interface 2 dynamically and for increasing the efficiency of the terminal 1 and/or the coupling-interface 2.

Parts of the terminal 1 and/or coupling-interface 2 like for example modems, filters, (de)modulators, (de)converters etc. for example located in transceivers 17 and/or 27 are configured to be in conformance with said service-definition-signal. And said service parameter can be supplied to said terminal 1 and/or coupling-interface 2 via said service-information-signal.

Said (packet/cell/frame) signals (to be) exchanged may comprise addresses like for example an Internet-Protocol-Address or a Multi-Protocol-Layer-System-Address or a Local-Area-Network-Address etc. Said network 5 may be for example be an Internet-Protocol-Network or a Multi-Protocol-Layer-System- Network or a Local-Area-Network etc. Said service parameter may be for example an Asynchronous-Transfer-Mode-Quality-of-Service parameter or a non-Asynchronous-Transfer-Mode-Quality-of-Service parameter or an Internet-Protocol service parameter or a Multi-Protocol-Layer-System service parameter or a Local-Area-Network service parameter etc. Said couplings 3 and network 5 may coincide and form one new network, and said direct coupling between transceivers 67 and 97 may form part of network 5 or not. Transceivers 67 and 97 each comprise for example a (de)multiplexer and/or a mini-switch and/or a mini-bridge and/or a mini-router and/or a mini-forwarder etc. for being able to transmit and receive via one out of two outgoing and incoming couplings, with for example said processor-systems 60 and 90 taking care of the proper addressing and controlling etc.

In the method according to the invention shown in Figure 3 in flow chart form for a non-permanent channel being present between coupling-interface 2 and service-selection-server 9 the blocks have the following meaning:
Block 200 : A user at terminal 1 selects a service via a service-selection-application in terminal 1.
Block 201 : The service-selection-application in terminal 1 either consults memory 18 or generates the service-definition-signal itself.
Block 202 : The service-selection-application in terminal 1 informs the Asynchronous-Transfer-Mode-Termination-Point in terminal 1 about the configuration. ,
Block 203 : The Asynchronous-Transfer-Mode-Termination-Point sets up one or more virtual connections from terminal 1 to service-selection-server 9.
Block 204 : The service-selection-application in terminal 1 informs the service-selection-server 9 via said one or more virtual connections set up via for example couplings 3.
Block 205 : The service-selection-server 9 consults either its own memory or a third party located elsewhere to be reached via couplings 3 or via network 5.
Block 206 : The service-selection-server 9 retrieves user data originating from terminal 1 and/or from its own memory and/or from memory 48 and/or from another location to be reached via couplings 3 or via network 5 for authentication and/or authorisation purposes.
Block 207 : The service-selection-server 9 configures access system 4 and/or couplings 3 and/or coupling-interface 2.
Block 208 : The Asynchronous-Transfer-Mode-Termination-Point and/or access system 4 set up one or more virtual connections from access system 4 to a providing-server 6.
Block 209 : Signals (to be) exchanged between said terminal 1 and said access system 4 are billed.

The method according to the invention shown in Figure 3 and in view of the system shown in Figure 1 functions in line with the description of the method shown in Figure 2. In addition, with a non-permanent channel being present between coupling-interface 2 and service-selection-server 9, like for example a Plain-Ordinary-Telephony-System Connection, which may form part of couplings 3 or not and which may flow via access system 4 or not, step (a) may comprise the steps (a1) of, at said terminal 1 and/or said coupling-interface 2, in dependence of said service-selection-signal (which for example refers to an old service-definition-signal used before or to a predefined service-definition-signal to be used for said setting up etc.), setting up a virtual connection from said coupling-interface 2 to said service-selection-server 9 via for example couplings 3 and (a2) of, at said terminal 1 and/or said coupling-interface 2, in dependence of said service-selection-signal, configuring parts of said terminal 1 and/or said coupling-interface 2, and step (d) may comprise the step (d3) of, at said access system 4, setting up a virtual connection from said access system 4 to said providing-server 6, and with said service parameter being prestored in said terminal 1 and/or said coupling-interface 2. Further, step (d) may comprise the step (d4) of, at said terminal 1 and/or said coupling-interface 2, in dependence of said service-information-signal, re-configuring parts of said terminal 1 and/or of said coupling-interface 2, for example to adapt said old service-definition-signal used before or said predefined service-definition-signal to be used for said setting up etc.).

Parts of the terminal 1 and/or coupling-interface 2 like for example modems, filters, (de)modulators, (de)converters etc. for example located in transceiver 17 and/or 27 are configured to be in conformance with said service-selection-signal. Thereby, said service parameter will be prestored in said terminal 1 and/or coupling-interface 2.

Access processor-system 40 comprises processor-system-parts 41-46, with part 41 for example being a (a) receiving processor-system-part 41 for receiving a configuration-signal from said service-selection-server 9, and with part 42 for example being a (b) configuring processor-system-part 42 for, in dependence of said configuration-signal, configuring at least parts of said access system 4 and at least parts of said couplings 3. Part 43 for example is a (c) generating/forwarding processor-system-part 43 for generating/forwarding a service-information-signal and transmitting said service-information-signal to said terminal 1, with part 44 for example being a (b1) generating processor-system-part 44 for generating said service-definition-signal, and with part 45 for example being a receiving processor-system-part 45 for receiving said service-definition-signal from said providing-server 6 defined by said service-selection-signal, and with part 46 for example being a (d3) setting-up processor-system-part for setting up a virtual connection from said access system 4 to said providing-server 6 via said network 5.

Service-selection-server processor-system 90 comprises processor-system-parts 91-96, with part 91 for example being a (a) receiving processor-system-part 91 for receiving (100,101) a service-selection-signal from said terminal 1, with part 92 for example being a (b) configuring processor-system-part 92 for, in dependence of a service-definition-signal, generating a configuration-signal and transmitting said configuration-signal to said access system 4 for configuring (104) at least parts of said access system 4 and at least parts of said couplings 3, and with part 93 being a (c) generating processor-system-part 93 for generating a service-information-signal and transmitting (105) said service-information-signal to said terminal 1.

Terminal processor-system 10 comprises processor-system-parts 11-16, with part 11 for example being a (a) selecting processor-system-part 11 for generating a service-selection-signal and transmitting (100,101) said service-selection-signal from said terminal 1 to said service-selection-server 9, with part 12 for example being a (c) receiving processor-system-part 12 for receiving (105) a service-information-signal from said service-selection-server (9), and with part 13 for example being a (d) communicating processor-system-part 13 for communicating (107,108) with said providing-server 6 via at least one coupling 3 defined by at least one service parameter. Part 14 may for example is a (d1) or (a2) configuring processor-system-part for, in dependence of said service-information-signal, configuring parts of said terminal 1 and/or of said coupling interface 2. Part 15 may for example be a (d2) or (a1) setting-up processor-system-part for setting up a virtual connection from said coupling-interface 2 to said access system 4.

Coupling-interface processor-system 20 comprises processor-system-parts 21-26, with part 21 for example being a (a) transceiving processor-system-part 21 for receiving a service-selection-signal from said terminal 1 and transmitting said service-selection-signal to said service-selection-server 9, with part 22 for example being a (c) receiving processor-system-part 22 for receiving a service-information-signal from said service-selection-server 9, and with part 23 for example being a (d) communicating processor-system-part 13 for communicating (107,108) with said providing-server 6 via at least one coupling 3 defined by at least one service parameter. Part 24 may for example be a (d1) or (a2) configuring processor-system-part for, in dependence of said service-information-signal, configuring parts of said terminal 1 and/or of said coupling interface 2. Part 25 may for example be a (d2) or (a1) setting-up processor-system-part for setting up a virtual connection from said coupling-interface 2 to said access system 4.

Providing-server processor-system 60 comprises processor-system-parts 61-66, with part 61 for example being a (f1) receiving processor-system-part 61 for receiving a request signal or a service-selection-signal from service-selection-server 9, with part 62 for example being a (f2) generating processor-system-part 62 for, in response to said request signal or said service-selection-signal, generating a service-definition-signal, with part 63 for example being a (f3) transmitting processor-system-part 63 for transmitting said service-definition-signal to said service-selection-server 9, and with part 64 for example being a (f4) communicating processor-system-part for communicating (107,108) with said terminal 1 via at least one coupling 3 defined by at least one service parameter.

The expression "for" in for example "for exchanging" and "for providing" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprises/included as well. The terms "a" and "an" do not exclude the possible presence of one or more pluralities. More than one coupling-interface 2 may be present between terminal 1 and access system 4. Permanent channel 3 or non-permanent channel 3 may coincide with packet-switched-couplings 3 or not in which case it may be a completely different coupling. The Asynchronous-Transfer-Mode-Termination-Point discussed at the hand of Figures 2 and 3 is just an example and may alternatively be an Multi-Protocol-Layer-System-Termination-Point or a Local-Area-Network-Termination-Point etc. Correspondingly, the term Asynchronous-Transfer-Mode used in this description is just an example and may alternatively be an Multi-Protocol-Layer-System or a Local-Area-Network etc.

The invention is based upon an insight, inter alia, that prior art services are selected statically and are specified statically, and prior art networks are used inefficiently, and is based upon a basic idea, inter alia, said service-selection-signal, said service-definition-signal, said configuring and said service-information-signal are to be introduced.

The invention solves the problem, inter alia, of providing a more dynamical and more efficient method, and is advantageous, inter alia, in that services can be selected dynamically and are specified dynamically, and the networks are used efficiently, and the terminal and/or the coupling-interface is/are informed dynamically and is/are made more efficient.

## Claims

1. Method for communication between a terminal (1) and a service-providing-server (6) or another terminal via an access system (4) providing access to a network (5), wherein the terminal (1) is coupled to a coupling-interface (2) able to communicate with the access system (4) by means of protocol couplings (3), said method comprising the steps of
(a) at said terminal (1), generating a service-selection-signal and transmitting said service-selection-signal (100,101) from said terminal (1) to a service-selection-server (9), and
(b) at said service-selection-server (9), in dependence of a service-definition-signal, obtained by said service-selection-server (9), generating a configuration-signal and transmitting said configuration-signal to said access system (4) for configuring (104) at least parts of said access system (4) and at least parts of said protocol couplings (3),
**characterised in that** said method further comprises the steps of
(c) at said service-selection-server (9), generating a service-information-signal and transmitting said service-information-signal (105) to said terminal (1) and/or said coupling-interface (2) to inform about the configurations made in at least parts of the access system (4) and in at least parts of the protocol couplings (3), which service-information-signal defines a protocol coupling (3) to be used, and
(d) at said terminal (1) and/or said coupling-interface (2), communicating (107,108) with said service-providing-server (6) or said other terminal via the protocol coupling (3) defined by at least one service parameter, which communicating (107,108) comprises an exchange of signals that comprise said at least one service parameter.

2. Method according to claim 1, **characterised in that** said step (b) comprises the step of (b1) at said service-selection-server (9), in dependence of said service-selection-signal, generating said service-definition-signal.

3. Method according to claim 1, **characterised in that** said step (b) comprises the step of (b2) at said service-selection-server (9), receiving said service-definition-signal from said service-providing-server (6) or said other terminal defined by said service-selection-signal.

4. Method according to claim 1, 2 or 3, **characterised in that** said coupling-interface (2) is coupled to a permanent channel, with said step (d) comprising the steps of (d1) at said terminal (1) and/or said coupling-interface (2), in dependence of said service-information-signal, configuring at least parts of said terminal (1) and/or of said coupling interface (2), and of (d2) at said terminal (1) and/or said coupling-interface (2), setting up a virtual connection from said coupling-interface (2) to said access system (4), and of (d3) at said access system (4), setting up a virtual connection from said access system (4) to said service-providing-server (6) or said other terminal, and with said service parameter being supplied to said terminal (1) and/or said coupling-interface (2) via said service-information-signal.

5. Method according to claim 1, 2 or 3, **characterised in that** said coupling-interface (2) is not coupled to said access system (4) via a permanent channel, with said step (a) comprising the steps of (a1) at said terminal (1) and/or said coupling-interface (2), in dependence of said service-selection-signal, setting up a virtual connection from said coupling-interface (2) to said service-selection-server (9) and of (a2) at said terminal (1) and/or said coupling-interface (2), in dependence of said service-selection-signal, configuring at least parts of said terminal (1) and/or said coupling-interface (2), and with said step (d) comprising the step of (d3) at said access system (4), setting up a virtual connection from said access system (4) to said service-providing-server (6) or said other terminal, and with said service parameter being prestored in said terminal (1) and/or said coupling-interface (2).

6. Method according to claim 5, **characterised in that** said step (d) comprises the step of (d4) at said terminal (1) and/or said coupling-interface (2), in dependence of said service-information-signal, re-configuring at least parts of said terminal (1) and/or of said coupling-interface (2).

7. Method according to any one of claims 1 to 6, **characterised in that** said method comprises the step of (e) at said access system (4), billing packet-signals (to be) exchanged (109) between said terminal (1) and/or of said coupling-interface (2) on the one hand and said service-providing-server (6) or said other terminal on the other hand.

8. Access system (4) for performing a method for communication between a terminal (1) and a service-providing-server (6) or another terminal via said access system (4) providing access to a network (5), wherein the terminal (1) is coupled to a coupling-interface (2) able to communicate with the access system (4) by means of protocol couplings (3), which access system (4) comprises an access processor-system (40) for controlling an access transceiver (47) for transmitting and receiving signals, said access processor-system (40) comprising
(a) a receiving processor-system-part (41) for receiving a configuration-signal from a service-selection-server (9), and
(b) a configuring processor-system-part (42) for, in dependence of said configuration-signal, configuring (104) at least parts of said access system (4) and at least parts of said protocol couplings (3),
**characterised in that** said access processor-system (40) further comprises
(c) a generating/forwarding processor-system-part (43) for generating/forwarding a service-information-signal and transmitting said service-information-signal to said terminal (1) and/or said coupling-interface (2) to inform about the configurations made in at least parts of the access system (4) and in at least parts of the protocol couplings (3), which service-information-signal defines a protocol coupling (3) to be used.

9. Access processor program product to be run via an access processor-system (40) for controlling an access transceiver (47) for transmitting and receiving signals and for use in an access system (4) for performing a method for communication between a terminal (1) and a service-providing-server (6) or another terminal via said access system (4) providing access to a network (5), wherein the terminal (1) is coupled to a coupling-interface (2) able to communicate with the access system (4) by means of protocol couplings (3), said access processor program product comprising the functions of
(a) receiving a configuration-signal from a service-selection-server (9), and
(b) in dependence of said configuration-signal, configuring (104) at least parts of said access system (4) and at least parts of said protocol couplings (3),
**characterised in that** said access processor program product further comprises the function of
(c) generating/forwarding a service-information-signal and transmitting said service-information-signal to said terminal (1) and/or said coupling-interface (2) to inform about the configurations made in at least parts of the access system (4) and in at least parts of the protocol couplings (3), which service-information-signal defines a protocol coupling (3) to be used.

10. Service-selection-server (9) for performing a method for communication between a terminal (1) and a service-providing-server (6) or another terminal via an access system (4) providing access to a network (5), wherein the terminal (1) is coupled to a coupling-interface (2) able to communicate with the access system (4) by means of protocol couplings (3), which service-selection-server (9) comprises a service-selection-server processor-system (90) for controlling a service-selection-server transceiver (97) for transmitting and receiving signals, said service-selection-server processor-system (90) comprising
(a) a receiving processor-system-part (91) for receiving (100,101) a service-selection-signal from said terminal (1),and
(b) a configuring processor-system-part (92) for, in dependence of a service-definition-signalobtained by said service-selection-server (9), generating a configuration-signal and transmitting said configuration-signal to said access system (4) for configuring (104) at least parts of said access system (4) and at least parts of said protocol couplings (3),
**characterised in that** said service-selection-server processor-system (90) further comprises
(c) a generating processor-system-part (93) for generating a service-information-signal and transmitting (105) said service-information-signal to said terminal (1) and/or said coupling-interface (2) to inform about the configurations made in at least parts of the access system (4) and in at least parts of the protocol couplings (3), which service-information-signal defines a protocol coupling (3) to be used.

11. Service-selection-server program product to be run via a service-selection-server processor-system for controlling a service-selection-server transceiver for transmitting and receiving signals and for use in a service-selection-server (9) for performing a method for communication between a terminal (1) and a service-providing-server (6) or another terminal via an access system (4) providing access to a network (5), wherein the terminal (1) is coupled to a coupling-interface (2) able to communicate with the access system (4) by means of protocol couplings (3), said service-selection-server program product comprising the functions of
(a) receiving (100,101) a service-selection-signal from said terminal (1),and
(b) in dependence of a service-definition-signal, obtained by said service-selection-server (9), generating a configuration-signal and transmitting said configuration-signal to said access system (4) for configuring (104) at least parts of said access system (4) and at least parts of said protocol couplings (3),
**characterised in that** said service-selection-server program product further comprises the function of
(c) generating a service-information-signal and transmitting (105) said service-information-signal to said terminal (1) and/or said coupling-interface (2) to inform about the configurations made in at least parts of the access system (4) and in at least parts of the protocol couplings (3), which service-information-signal defines a protocol coupling (3) to be used.

12. Terminal (1) for performing a method for communication between said terminal (1) and a service-providing-server (6) or another terminal via an access system (4) providing access to a network (5), wherein the terminal (1) is adapted to be coupled to a coupling-interface (2) able to communicate with the access system (4) by means of protocol couplings (3), which terminal (1) comprises a terminal processor-system (10) for controlling a terminal transceiver (17) for transmitting and receiving signals, said terminal processor-system (10) comprising
(a) a selecting processor-system-part (11) for generating a service-selection-signal and transmitting (100,101) said service-selection-signal from said terminal (1) to a service-selection-server (9),
**characterised in that** said terminal processor-system (10) further comprises
(c) a receiving processor-system-part (12) for receiving (105) a service-information-signal from said service-selection-server (9) to inform about the configurations made in at least parts of the access system (4) and in at least parts of the protocol couplings (3), which service-information-signal defines a protocol coupling (3) to be used, and
(d) a communicating processor-system-part (13) for communicating (107,108) with said service-providing-server (6) or said other terminal via the protocol coupling (3) defined by at least one service parameter, which communicating (107,108) comprises an exchange of signals that comprise said at least one service parameter.

13. Terminal processor program product to be run via a terminal processor-system (10) for controlling a terminal transceiver (17) for transmitting and receiving signals and for use in a terminal (1) for performing a method for communication between said terminal (1) and a service-pro-viding-server (6) or another terminal via an access system (4) providing access to a network (5), wherein the terminal (1) is coupled to a coupling-interface (2) able to communicate with the access system (4) by means of protocol couplings (3), said terminal processor program product comprising the function of
(a) generating a service-selection-signal and transmitting (100,101) said service-selection-signal from said terminal (1) to a service-selection-server (9),
**characterised in that** said terminal processor program product further comprises the functions of
(c) receiving a service-information-signal from said service-selection-server (9) to inform about the configurations made in at least parts of the access system (4) and in at least parts of the protocol couplings (3), which service-information-signal defines a protocol coupling (3) to be used, and
(d) communicating (107,108) with said service-providing-server (6) or said other terminal via the protocol coupling (3) defined by at least one service parameter, which communicating (107,108) comprises an exchange of signals that comprise said at least one service parameter.

14. Coupling-interface (2) for performing a method for communication between a terminal (1) and a service-providing-server (6) or another terminal via an access system (4) providing access to a network (5), wherein the coupling interface is adapted so that the terminal (1) can be coupled to said coupling-interface (2) and the coupling interface is able to communicate with the access system (4) by means of protocol couplings (3), which coupling-interface (2) comprises a coupling-interface processor-system (20) for controlling a coupling-interface transceiver (27) for transmitting and receiving signals, said coupling-interface processor-system (20) comprising
(a) a transceiving processor-system-part (21) for receiving a service-selection-signal from said terminal (1) and transmitting (100,101) said service-selection-signal to a service-selection-server (9),
**characterised in that** said coupling-interface processor-system (20) further comprises
(c) a receiving processor-system-part (22) for receiving (105) a service-information-signal from said service-selection-server (9) to inform about the configurations made in at least parts of the access system (4) and in at least parts of the protocol couplings (3), which service-information-signal defines a protocol coupling (3) to be used, and
(d) a communicating processor-system-part (23) for communicating (107,108) with said service-providing-server (6) or said other terminal via the protocol coupling (3) defined by at least one service parameter, which communicating (107,108) comprises an exchange of signals that comprise said at least one service parameter.

15. Coupling-interface processor program product to be run via a coupling-interface processor-system (20) for controlling a coupling-interface transceiver (27) for transmitting and receiving signals and for use in a coupling-interface (2) for performing a method for communication between a terminal (1) and a service-providing-server (6) or another terminal via an access system (4) providing access to a network (5), wherein the terminal (1) is coupled to said coupling-interface (2) able to communicate with the access system (4) by means of protocol couplings (3), said coupling-interface processor program product comprising the function of
(a) receiving a service-selection-signal from said terminal (1) and transmitting (100,101) said service-selection-signal to a service-selection-server (9),
**characterised in that** said coupling-interface processor program product further comprises the functions of
(c) receiving (105) a service-information-signal from said service-selection-server (9) to inform about the configurations made in at least parts of the access system (4) and in at least parts of the protocol couplings (3), which service-information-signal defines a protocol coupling (3) to be used, and
(d) communicating (107,108) with said service-providing-server (6) or said other terminal via the protocol coupling (3) defined by at least one service parameter, which communicating (107,108) comprises an exchange of signals that comprise said at least one service parameter.

## Patentansprüche

1. Verfahren zur Kommunikation zwischen einem Terminal (1) und einem dienstanbietenden Server (6) oder einem anderen Terminal über ein Zugangssystem (4), das Zugang zu einem Netzwerk (5) bietet, wobei das Terminal (1) mit einer Kopplungs-Schnittstelle (2) gekoppelt ist, die in der Lage ist, mit dem Zugangssystem (4) durch Protokoll-Kopplungen (3) zu kommunizieren, wobei das Verfahren die folgenden Schritte umfasst:
(a) An dem Terminal (1) Erzeugung eines Dienstauswahl-Signals und Senden des Dienstauswahl-Signals (100, 101) von dem Terminal (1) zu einem Dienstauswahl-Server (9), und
(b) an dem Dienstauswahl-Server (9) in Abhängigkeit von einem Dienst-Definitions-Signal, das der Dienstauswahl-Server (9) erhält, Erzeugung eines Konfigurations-Signals und Senden des Konfigurations-Signals an das Zugangssystem (4) zur Konfiguration (104) wenigstens eines Teils des Zugangssystems (4) und wenigstens von Teilen der Protokoll-Kopplungen (3),
**dadurch gekennzeichnet, dass** das Verfahren weiterhin folgende Schritte umfasst:
(c) an dem Dienstauswahl-Server (9) Erzeugung eines Dienst-Informations-Signals und Senden des Dienst-Informations-Signals (105) an das Terminal (1) und/oder die Kopplungs-Schnittstelle (2), um die Konfigurationen zu melden, die in mindestens Teilen des Zugangssystems (4) und in mindestens Teilen der Protokoll-Kopplungen (3) durchgeführt wurden, wobei das Dienst-Informations-Signal eine zu benutzende Protokoll-Kopplung (3) definiert, und
(d) an dem Terminal (1) und/oder der Kopplungs-Schnittstelle (2) Kommunikation (107, 108) mit dem dienstanbietenden Server (6) oder dem anderen Terminal über die Protokoll-Kopplung (3), die durch mindestens einen Dienstparameter definiert ist, wobei die Kommunikation (107, 108) einen Austausch von Signalen umfasst, die den mindestens einen Dienstparameter enthalten.

2. Verfahren gemäß Anspruch 1, **dadurch gekennzeichnet, dass** Schritt (b) den Schritt (b1) umfasst, im Dienstauswahl-Server (9) abhängig vom Dienstauswahl-Signal das Dienst-Definitions-Signal zu erzeugen.

3. Verfahren gemäß Anspruch 1, **dadurch gekennzeichnet, dass** Schritt (b) den Schritt (b2) umfasst, im Dienstauswahl-Server (9) das Dienst-Definitions-Signal vom dienstanbietenden Server (6) oder von dem anderen Terminal, das durch das Dienstauswahl-Signal definiert wird, zu empfangen.

4. Verfahren gemäß Anspruch 1, 2 oder 3, **dadurch gekennzeichnet, dass** die Kopplungs-Schnittstelle (2) mit einem permanenten Kanal gekoppelt ist, wobei Schritt (d) die Schritte (d1) enthält, mit dem in dem Terminal (1) und/oder der Kopplungs-Schnittstelle (2) in Abhängigkeit von dem Dienst-Informations-Signal mindestens Teile des Terminals (1) und/oder der Kopplungs-Schnittstelle (2) konfiguriert werden, und den Schritt (d2), mit dem im Terminal (1) und/oder der Kopplungs-Schnittstelle (2) eine virtuelle Verbindung von der Kopplungs-Schnittstelle (2) zu dem Zugangssystem (4) aufgebaut wird, und Schritt (d3), mit dem im Zugangssystem (4) eine virtuelle Verbindung vom Zugangssystem (4) zum dienstanbietenden Server (6) oder dem anderen Terminal aufgebaut wird, und wobei der Dienstparameter über das Dienst-Informations-Signal an das Terminal (1) und/oder die Kopplungs-Schnittstelle (2) geliefert wird.

5. Verfahren gemäß Anspruch 1, 2 oder 3, **dadurch gekennzeichnet, dass** die Kopplungs-Schnittstelle (2) nicht über einen permanenten Kanal mit dem Zugangssystem (4) gekoppelt ist, wobei Schritt (a) die Schritte (a1) enthält, mit dem in dem Terminal (1) und/oder der Kopplungs-Schnittstelle (2) in Abhängigkeit von dem Dienstauswahl-Signal eine virtuelle Verbindung von der Kopplungs-Schnittstelle (2) zum Dienstauswahl-Server (9) aufgebaut wird, und Schritt (a2), mit dem im Terminal (1) und/oder der Kopplungs-Schnittstelle (2) abhängig von dem Dienstauswahl-Signal mindestens Teile des Terminals (1) und/oder der Kopplungs-Schnittstelle (2) konfiguriert werden, und Schritt (d), der den Schritt (d3) enthält, mit dem im Zugangssystem (4) eine virtuelle Verbindung vom Zugangssystem (4) zum dienstanbietenden Server (6) oder dem anderen Terminal aufgebaut wird, und wobei der Dienstparameter in dem Terminal (1) und/oder der Kopplungs-Schnittstelle (2) vorgespeichert wird.

6. Verfahren gemäß Anspruch 5, **dadurch gekennzeichnet, dass** der Schritt (d) den Schritt (d4) enthält, mit dem in dem Terminal (1) und/oder der Kopplungs-Schnittstelle (2) in Abhängigkeit von dem Dienst-Informations-Signal mindestens Teile des Terminals (1) und/oder der Kopplungs-Schnittstelle (2) neu konfiguriert werden.

7. Verfahren gemäß irgendeinem der Ansprüche 1 bis 6, **dadurch gekennzeichnet, dass** das Verfahren den Schritt (e) enthält, mit dem in dem Zugangssystem (4) die Gebühren für die Paketsignale, die zwischen dem Terminal (1) und/oder der Kopplungs-Schnittstelle (2) einerseits und dem dienstanbietenden Server (6) oder dem anderen Terminal andererseits ausgetauscht werden (auszutauschen sind) (109), in Rechnung gestellt werden.

8. Zugangssystem (4) zur Ausführung eines Verfahrens zur Kommunikation zwischen einem Terminal (1) und einem dienstanbietenden Server (6) oder einem anderen Terminal über das Zugangssystem (4), das Zugang zu einem Netzwerk (5) bietet, wobei das Terminal (1) mit einer Kopplungs-Schnittstelle (2) gekoppelt ist, die in der Lage ist, mit dem Zugangssystem (4) durch Protokoll-Kopplungen (3) zu kommunizieren, wobei das Zugangssystem (4) ein Zugangs-Prozessorsystem (40) zur Steuerung eines Zugangs-Transceivers (47) zum Senden und Empfangen von Signalen enthält, wobei das Zugangs-Prozessorsystem (40) folgendes umfasst:
(a) Einen Empfangs-Prozessorsystem-Teil (41) zum Empfang eines Konfigurations-Signals von einem Dienstauswahl-Server (9), und
(b) einen Konfigurations-Prozessorsystem-Teil (42), um in Abhängigkeit von dem Konfigurations-Signal mindestens Teile des Zugangssystems (4) und mindestens Teile der Protokoll-Kopplungen (3) zu konfigurieren (104),
**dadurch gekennzeichnet, dass** das Zugangs-Prozessorsystem (40) weiterhin folgendes umfasst:
(c) einen Erzeugungs-/Weiterleitungs-Prozessorsystem-Teil (43) zur Erzeugung/Weiterleitung eines Dienst-Informations-Signals und zum Senden des Dienst-Informations-Signals zum Terminal (1) und/oder der Kopplungs-Schnittstelle (2), um über die Konfigurationen zu informieren, die in mindestens Teilen des Zugangssystems (4) und in mindestens Teilen der Protokoll-Kopplungen (3) durchgeführt wurden, wobei das Dienst-Informations-Signal eine zu benutzende Protokoll-Kopplung (3) definiert.

9. Zugangs-Prozessor-Programmprodukt, das auf einem Zugangs-Prozessorsystem (40) ausgeführt wird, um einen Zugangs-Transceiver (47) zum Senden und Empfangen von Signalen zu steuern, und zur Verwendung in einem Zugangssystem (4) zur Ausführung eines Verfahrens zur Kommunikation zwischen einem Terminal (1) und einem dienstanbietenden Server (6) oder einem anderen Terminal über das Zugangssystem (4), das Zugang zu einem Netzwerk (5) bietet, wobei das Terminal (1) mit einer Kopplungs-Schnittstelle (2) gekoppelt ist, die in der Lage ist, mit dem Zugangssystem (4) durch Protokoll-Kopplungen (3) zu kommunizieren, wobei das Zugangs-Prozessor-Programmprodukt folgende Funktionen umfasst:
(a) Empfang eines Konfigurations-Signals von einem Dienstauswahl-Server (9), und
(b) in Abhängigkeit von dem Konfigurations-Signal Konfiguration (104) von mindestens Teilen des Zugangssystems (4) und mindestens Teilen der Protokoll-Kopplungen (3),
**dadurch gekennzeichnet, dass** das Zugangs-Prozessor-Programmprodukt weiterhin folgende Funktion umfasst:
(c) Erzeugung/Weiterleitung eines Dienst-Informations-Signals und Senden des Dienst-Informations-Signals zum Terminal (1) und/oder zur Kopplungs-Schnittstelle (2), um über die Konfigurationen zu informieren, die in mindestens Teilen des Zugangssystems (4) und in mindestens Teilen der Protokoll-Kopplungen (3) durchgeführt wurden, wobei das Dienst-Informations-Signal eine zu benutzende Protokoll-Kopplung (3) definiert.

10. Dienstauswahl-Server (9) zur Ausführung eines Verfahrens zur Kommunikation zwischen einem Terminal (1) und einem dienstanbietenden Server (6) oder einem anderen Terminal über ein Zugangssystem (4), das Zugang zu einem Netzwerk (5) bietet, wobei das Terminal (1) mit einer Kopplungs-Schnittstelle (2) gekoppelt ist, die in der Lage ist, mit dem Zugangssystem (4) durch Protokoll-Kopplungen (3) zu kommunizieren, wobei der Dienstauswahl-Server (9) ein Dienstauswahl-Server-Prozessorsystem (90) zur Steuerung eines Dienstauswahl-Transceivers (97) zum Senden und Empfangen von Signalen enthält, wobei das Dienstauswahl-Server-Prozessorsystem (90) folgendes umfasst:
(a) Einen Empfangs-Prozessorsystem-Teil (91) zum Empfangen (100, 101) eines Dienstauswahl-Signals von dem Terminal (1), und
(b) einen Konfigurations-Prozessorsystem-Teil (92), um in Abhängigkeit von einem Dienst-Definitions-Signal, das von dem Dienstauswahl-Server (9) erhalten wird, ein Konfigurations-Signal zu erzeugen und das Konfigurations-Signal zum Zugangssystem (4) zu senden, um wenigstens Teile des Zugangssystems (4) und wenigstens Teile der Protokoll-Kopplungen (3) zu konfigurieren (104),
**dadurch gekennzeichnet, dass** das Dienstauswahl-Prozessorsystem (90) weiterhin folgendes umfasst:
(c) Einen Erzeugungs-Prozessorsystem-Teil (93) zur Erzeugung eines Dienst-Informations-Signals und zum Senden (105) des Dienst-Informations-Signals zum Terminal (1) und/oder zur Kopplungs-Schnittstelle (2), um über die Konfigurationen zu informieren, die in mindestens Teilen des Zugangssystems (4) und in mindestens Teilen der Protokoll-Kopplungen (3) durchgeführt wurden, wobei das Dienst-Informations-Signal eine zu benutzende Protokoll-Kopplung (3) definiert.

11. Dienstauswahl-Server-Programmprodukt zur Ausführung auf einem Dienstauswahl-Server-Prozessorsystem zur Steuerung eines Dienstauswahl-Server-Transceivers zum Senden und Empfangen von Signalen und zur Verwendung in einem Dienstauswahl-Server (9) zur Ausführung eines Verfahrens zur Kommunikation zwischen einem Terminal (1) und einem dienstanbietenden Server (6) oder einem anderen Terminal über ein Zugangssystem (4), das Zugang zu einem Netzwerk (5) bietet, wobei das Terminal (1) mit einer Kopplungs-Schnittstelle (2) gekoppelt ist, die in der Lage ist, mit dem Zugangssystem (4) durch Protokoll-Kopplungen (3) zu kommunizieren, wobei das Dienstauswahl-Server-Programmprodukt folgende Funktionen umfasst:
(a) Empfang (100, 101) eines Dienstauswahl-Signals von dem Terminal (1), und
(b) in Abhängigkeit von einem Dienst-Definitions-Signal, das von dem Dienstauswahl-Server (9) erhalten wird, Erzeugen eines Konfigurations-Signals und Senden des Konfigurations-Signals zum Zugangssystem (4), um wenigstens Teile des Zugangssystems (4) und wenigstens Teile der Protokoll-Kopplungen (3) zu konfigurieren (104),
**dadurch gekennzeichnet, dass** das Dienstauswahl-Server-Programmprodukt weiterhin folgende Funktion umfasst:
(c) Erzeugung eines Dienst-Informations-Signals und Senden (105) des Dienst-Informations-Signals zum Terminal (1) und/oder zur Kopplungs-Schnittstelle (2), um über die Konfigurationen zu informieren, die in mindestens Teilen des Zugangssystems (4) und in mindestens Teilen der Protokoll-Kopplungen (3) durchgeführt wurden, wobei das Dienst-Informations-Signal eine zu benutzende Protokoll-Kopplung (3) definiert.

12. Terminal (1) zur Ausführung eines Verfahrens zur Kommunikation zwischen dem Terminal (1) und einem dienstanbietenden Server (6) oder einem anderen Terminal über ein Zugangssystem (4), das Zugang zu einem Netzwerk (5) bietet, wobei das Terminal (1) angepasst ist, mit einer Kopplungs-Schnittstelle (2) gekoppelt zu werden, die in der Lage ist, mit dem Zugangssystem (4) durch Protokoll-Kopplungen (3) zu kommunizieren, wobei das Terminal (1) ein Terminal-Prozessorsystem (10) zur Steuerung eines Terminal-Transceivers (17) zum Senden und Empfangen von Signalen enthält, wobei das Terminal-Prozessorsystem (10) folgendes umfasst:
(a) Einen Auswahl-Prozessorsystem-Teil (11) zum Erzeugen eines Dienstauswahl-Signals und zum Senden (100, 101) des Dienstauswahl-Signals von dem Terminal (1) zu einem Dienstauswahl-Server (9),
**dadurch gekennzeichnet, dass** das Terminal-Prozessorsystem (10) weiterhin folgendes umfasst:
(c) Einen Empfangs-Prozessorsystem-Teil (12) zum Empfang (105) eines Dienst-Informations-Signals von dem Dienstauswahl-Server (9), um über die Konfigurationen zu informieren, die in mindestens Teilen des Zugangssystems (4) und in mindestens Teilen der Protokoll-Kopplungen (3) durchgeführt wurden, wobei das Dienst-Informations-Signal eine zu benutzende Protokoll-Kopplung (3) definiert, und
(d) einen Kommunikations-Prozessorsystem-Teil (13) zur Kommunikation (107, 108) mit dem dienstanbietenden Server (6) oder dem anderen Terminal über die Protokoll-Kopplung (3), die durch mindestens einen Dienstparameter definiert ist, wobei die Kommunikation (107, 108) einen Austausch von Signalen umfasst, die mindestens den einen Dienstparameter enthalten.

13. Terminal-Prozessor-Programmprodukt zur Ausführung auf einem Terminal-Prozessorsystem (10) zur Steuerung eines Terminal-Transceivers (17) zum Senden und Empfangen von Signalen und zur Verwendung in einem Terminal (1) zur Ausführung eines Verfahrens zur Kommunikation zwischen dem Terminal (1) und einem dienstanbietenden Server (6) oder einem anderen Terminal über ein Zugangssystem (4), das Zugang zu einem Netzwerk (5) bietet, wobei das Terminal (1) mit einer Kopplungs-Schnittstelle (2) gekoppelt ist, die in der Lage ist, mit dem Zugangssystem (4) durch Protokoll-Kopplungen (3) zu kommunizieren, wobei das Terminal-Prozessor-Programmprodukt folgende Funktionen umfasst:
(a) Erzeugen eines Dienstauswahl-Signals und Senden (100, 101) des Dienstauswahl-Signals von dem Terminal (1) zu einem Dienstauswahl-Server (9),
**dadurch gekennzeichnet, dass** das Terminal-Prozessor-Programmprodukt weiterhin folgende Funktionen umfasst:
(c) Empfangen eines Dienst-Informations-Signals von dem Dienstauswahl-Server (9),um über die Konfigurationen zu informieren, die in mindestens Teilen des Zugangssystems (4) und in mindestens Teilen der Protokoll-Kopplungen (3) durchgeführt wurden, wobei das Dienst-Informations-Signal eine zu benutzende Protokoll-Kopplung (3) definiert, und
(d) Kommunikation (107, 108) mit dem dienstanbietenden Server (6) oder dem anderen Terminal über die Protokoll-Kopplung (3), die durch mindestens einen Dienstparameter definiert ist, wobei die Kommunikation (107, 108) einen Austausch von Signalen umfasst, die den mindestens einen Dienstparameter enthalten.

14. Kopplungs-Schnittstelle (2) zur Ausführung eines Verfahrens zur Kommunikation zwischen einem Terminal (1) und einem dienstanbietenden Server (6) oder einem anderen Terminal über ein Zugangssystem (4), das Zugang zu einem Netzwerk (5) bietet, wobei die Kopplungs-Schnittstelle so angepasst ist, dass das Terminal (1), das mit der Kopplungs-Schnittstelle (2) gekoppelt ist, und die Kopplungs-Schnittstelle in der Lage sind, mit dem Zugangssystem (4) durch Protokoll-Kopplungen (3) zu kommunizieren, wobei die Kopplungs-Schnittstelle (2) ein Kopplungs-Schnittstellen-Prozessorsystem (20) zur Steuerung eines Kopplungs-Schnittstellen-Transceivers (27) zum Senden und Empfangen von Signalen enthält, wobei das Kopplungs-Schnittstellen-Prozessorsystem (20) folgendes umfasst:
(a) Einen Transceiver-Prozessorsystem-Teil (21) zum Empfang eines Dienstauswahl-Signals von dem Terminal (1) und zum Senden (100, 101) des Dienstauswahl-Signals zu einem Dienstauswahl-Server (9),
**dadurch gekennzeichnet, dass** das Kopplungs-Schnittstellen-Prozessorsystem (20) weiterhin folgendes umfasst:
(c) Einen Empfangs-Prozessorsystem-Teil (22) zum Empfang (105) eines Dienst-Informations-Signals von dem Dienstauswahl-Server (9), um über die Konfigurationen zu informieren, die in mindestens Teilen des Zugangssystems (4) und in mindestens Teilen der Protokoll-Kopplungen (3) durchgeführt wurden, wobei das Dienst-Informations-Signal eine zu benutzende Protokoll-Kopplung (3) definiert, und
(d) einen Kommunikations-Prozessorsystem-Teil (23) zur Kommunikation (107, 108) mit dem dienstanbietenden Server (6) oder dem anderen Terminal über die Protokoll-Kopplung (3), die durch mindestens einen Dienstparameter definiert ist, wobei die Kommunikation (107, 108) einen Austausch von Signalen umfasst, die den mindestens einen Dienstparameter enthalten.

15. Kopplungs-Schnittstellen-Prozessor-Programmprodukt zur Ausführung auf einem Kopplungs-Schnittstellen-Prozessorsystem (20) zur Steuerung eines Kopplungs-Schnittstellen-Transceivers (27) zum Senden und Empfangen von Signalen und zur Verwendung in einer Kopplungs-Schnittstelle (2) zur Ausführung eines Verfahrens zur Kommunikation zwischen einem Terminal (1) und einem dienstanbietenden Server (6) oder einem anderen Terminal über ein Zugangssystem (4), das Zugang zu einem Netzwerk (5) bietet, wobei das Terminal (1) mit der Kopplungs-Schnittstelle (2) gekoppelt ist, die in der Lage ist, mit dem Zugangssystem (4) durch Protokoll-Kopplungen (3) zu kommunizieren, wobei das Kopplungs-Schnittstellen-Prozessor-Programmprodukt folgende Funktionen umfasst:
(a) Empfangen eines Dienstauswahl-Signals vom Terminal (1) und Senden (100, 101) des Dienstauswahl-Signals zu einem Dienstauswahl-Server (9),
**dadurch gekennzeichnet, dass** das Kopplungs-Schnittstellen-Prozessor-Programmprodukt weiterhin folgende Funktionen umfasst:
(c) Empfangen (105) eines Dienst-Informations-Signals von dem Dienstauswahl-Server (9), um über die Konfigurationen zu informieren, die in mindestens Teilen des Zugangssystems (4) und in mindestens Teilen der Protokoll-Kopplungen (3) durchgeführt wurden, wobei das Dienst-Informations-Signal eine zu benutzende Protokoll-Kopplung (3) definiert, und
(d) Kommunikation (107, 108) mit dem dienstanbietenden Server (6) oder dem anderen Terminal über die Protokoll-Kopplung (3), die durch mindestens einen Dienstparameter definiert ist, wobei die Kommunikation (107, 108) einen Austausch von Signalen umfasst, die den mindestens einen Dienstparameter enthalten.

## Revendications

1. Procédé de communication entre un terminal (1) et un serveur fournissant des services (6) ou un autre terminal par le biais d'un système d'accès (4) fournissant un accès à un réseau (5), dans lequel le terminal (1) est couplé à une interface de couplage (2) capable de communiquer avec le système d'accès (4) au moyen de couplages de protocole (3), ledit procédé comprenant les étapes consistant à :
(a) au niveau dudit terminal (1), générer un signal de sélection de service et transmettre ledit signal de sélection de service (100, 101) dudit ledit terminal (1) à un serveur de sélection de service (9), et
(b) au niveau dudit serveur de sélection de service (9), en fonction d'un signal de définition de service, obtenu par ledit serveur de sélection de service (9), générer un signal de configuration et transmettre ledit signal de configuration au dit système d'accès (4) pour configurer (104) au moins des parties dudit système d'accès (4) et au moins des parties desdits couplages de protocole (3),
**caractérisé en ce que** ledit procédé comprend en outre les étapes consistant à :
(c) au niveau dudit serveur de sélection de service (9), générer un signal d'information de service et transmettre ledit signal d'information de service (105) au dit terminal (1) et/ou à ladite interface de couplage (2) pour l'informer sur les configurations faites dans au moins des parties du système d'accès (4) et dans au moins des parties des couplages de protocole (3), lequel signal d'information de service définit un couplage de protocole (3) à utiliser, et
(d) au niveau dudit terminal (1) et/ou de ladite interface de couplage (2), communiquer (107, 108) avec ledit serveur fournissant des services (6) ou ledit autre terminal par le biais du couplage de protocole (3) défini par au moins un paramètre de service, laquelle communication (107, 108) comprend un échange des signaux qui comprennent ledit au moins un paramètre de service.

2. Procédé selon la revendication 1, **caractérisé en ce que** ladite étape (b) comprend l'étape (b1) consistant à, au niveau dudit serveur de sélection de service (9), en fonction dudit signal de sélection de service, générer ledit signal de définition de service.

3. Procédé selon la revendication 1, **caractérisé en ce que** ladite étape (b) comprend l'étape (b2) consistant à, au niveau dudit serveur de sélection de service (9), recevoir ledit signal de définition de service provenant dudit serveur fournissant des services (6) ou dudit autre terminal défini par ledit signal de sélection de service.

4. Procédé selon la revendication 1, 2 ou 3, **caractérisé en ce que** ladite interface de couplage (2) est couplée à un canal permanent, ladite étape (d) comprenant l'étape (d1) consistant à, au niveau dudit terminal (1) et/ou de ladite interface de couplage (2), en fonction dudit signal d'information de service, configurer au moins des parties dudit terminal (1) et/ou de ladite interface de couplage (2), l'étape (d2) consistant à, au niveau dudit terminal (1) et/ou de ladite interface de couplage (2), établir une connexion virtuelle de ladite interface de couplage (2) au dit système d'accès (4), et l'étape (d3) consistant à, au niveau dudit système d'accès (4), établir une connexion virtuelle dudit système d'accès (4) au dit serveur fournissant des services (6) ou au dit autre terminal, ledit paramètre de service étant fourni au dit terminal (1) et/ou à ladite interface de couplage (2) par le biais dudit signal d'information de service.

5. Procédé selon la revendication 1, 2 ou 3, **caractérisé en ce que** ladite interface de couplage (2) n'est pas couplée au dit système d'accès (4) par le biais d'un canal permanent, ladite étape (a) comprenant l'étape (a1) consistant à, au niveau dudit terminal (1) et/ou de ladite interface de couplage (2), en fonction dudit signal de sélection de service, établir une connexion virtuelle de ladite interface de couplage (2) au dit serveur de sélection de service (9), et l'étape (a2) consistant à, au niveau dudit terminal (1) et/ou de ladite interface de couplage (2), en fonction dudit signal de sélection de service, configurer au moins des parties dudit terminal (1) et/ou de ladite interface de couplage (2), et ladite étape (d) comprenant l'étape (d3) consistant à, au niveau dudit système d'accès (4), établir une connexion virtuelle dudit système d'accès (4) au dit serveur fournissant des services (6) ou au dit autre terminal, et ledit paramètre de service étant stocké au préalable dans ledit terminal (1) et/ou ladite interface de couplage (2).

6. Procédé selon la revendication 5, **caractérisé en ce que** ladite étape (d) comprend l'étape (d4) consistant à, au niveau dudit terminal (1) et/ou de ladite interface de couplage (2), en fonction dudit signal d'information de service, re-configurer au moins des parties dudit terminal (1) et/ou de ladite interface de couplage (2).

7. Procédé selon une quelconque des revendications 1 à 6, **caractérisé en ce que** ledit procédé comprend l'étape (e) consistant à, au niveau dudit système d'accès (4), facturer des signaux de paquets (devant être) échangés (109), d'un côté entre ledit terminal (1) et/ou ladite interface de couplage (2) et, d'un autre côté ledit serveur fournissant des services (6) ou ledit autre terminal.

8. Système d'accès (4) destiné à effectuer un procédé de communication entre un terminal (1) et un serveur fournissant des services (6) ou un autre terminal par le biais dudit système d'accès (4) fournissant un accès à un réseau (5), dans lequel le terminal (1) est couplé à une interface de couplage (2) capable de communiquer avec le système d'accès (4) au moyen de couplages de protocole (3), lequel système d'accès (4) comprend un système processeur d'accès (40) pour commander un émetteur-récepteur d'accès (47) afin d'émettre et de recevoir des signaux, ledit système processeur d'accès (40) comprenant :
(a) une partie de système processeur de réception (41) destinée à recevoir un signal de configuration provenant d'un serveur de sélection de service (9), et
(b) une partie de système processeur de configuration (42) destinée, en fonction dudit signal de configuration, à configurer (104) au moins des parties dudit système d'accès (4) et au moins des parties desdits couplages de protocole (3),
**caractérisé en ce que** ledit système processeur d'accès (40) comprend en outre
(c) une partie de système processeur de génération/réexpédition (43) destinée à générer/réexpédier un signal d'information de service et transmettre ledit signal d'information de service au dit terminal (1) et/ou à ladite interface de couplage (2) pour l'informer sur les configurations faites dans au moins des parties du système d'accès (4) et dans au moins des parties des couplages de protocole (3), le signal d'information de service définissant un couplage de protocole (3) à utiliser.

9. Produit de programme de processeur d'accès pour être exécuté par un système processeur d'accès (40) afin de commander un émetteur-récepteur d'accès (47) destiné à émettre et recevoir des signaux et pour être utilisé dans un système d'accès (4) afin d'effectuer un procédé de communication entre un terminal (1) et un serveur fournissant des services (6) ou un autre terminal par le biais dudit système d'accès (4) fournissant un accès à un réseau (5), dans lequel le terminal (1) est couplé à une interface de couplage (2) capable de communiquer avec le système d'accès (4) au moyen de couplages de protocole (3), ledit produit de programme de processeur d'accès comprenant les fonctions de :
(a) recevoir un signal de configuration provenant d'un serveur de sélection de service (9), et
(b) en fonction dudit signal de configuration, configurer (104) au moins des parties dudit système d'accès (4) et au moins des parties desdits couplages de protocole (3),
**caractérisé en ce que** ledit produit de programme de processeur d'accès comprend en outre la fonction de :
(c) générer/réexpédier un signal d'information de service et transmettre ledit signal d'information de service au dit terminal (1) et/ou à ladite interface de couplage (2) pour l'informer des configurations faites dans au moins des parties du système d'accès (4) et dans au moins des parties des couplages de protocole (3), le signal d'information de service définissant un couplage de protocole (3) à utiliser.

10. Serveur de sélection de service (9) pour effectuer un procédé de communication entre un terminal (1) et un serveur fournissant des services (6) ou un autre terminal par le biais d'un système d'accès (4) fournissant un accès à un réseau (5), dans lequel le terminal (1) est couplé à une interface de couplage (2) capable de communiquer avec le système d'accès (4) au moyen de couplages de protocole (3), lequel serveur de sélection de service (9) comprend un système processeur de serveur de sélection de service (90) pour commander un émetteur-récepteur de serveur de sélection de service (97) afin d'émettre et de recevoir des signaux, ledit système processeur de serveur de sélection de service (90) comprenant :
(a) une partie de système processeur de réception (91) destinée à recevoir (100, 101) un signal de sélection de service provenant dudit terminal (1), et
(b) une partie de système processeur de configuration (92) destinée à, en fonction d'un signal de définition de service, obtenu par ledit serveur de sélection de service (9), générer un signal de configuration et transmettre ledit signal de configuration au dit système d'accès (4) afin de configurer (104) au moins des parties dudit système d'accès (4) et au moins des parties desdits couplages de protocole (3),
**caractérisé en ce que** ledit système processeur de serveur de sélection de service (90) comprend en outre :
(c) une partie de système processeur de génération (93) destinée à générer un signal d'information de service et à transmettre (105) ledit signal d'information de service au dit terminal (1) et/ou à ladite interface de couplage (2) pour l'informer sur les configurations faites dans au moins des parties du système d'accès (4) et dans au moins des parties des couplages de protocole (3), le signal d'information de service définissant un couplage de protocole (3) à utiliser.

11. Produit de programme de serveur de sélection de service pour être exécuté par le biais d'un système processeur de serveur de sélection de service afin de commander un émetteur-récepteur de serveur de sélection de service pour émettre et recevoir des signaux et pour être utilisé dans un serveur de sélection de service (9) afin d'effectuer un procédé de communication entre un terminal (1) et un serveur fournissant des services (6) ou un autre terminal par le biais d'un système d'accès (4) fournissant un accès à un réseau (5), dans lequel le terminal (1) est couplé à une interface de couplage (2) capable de communiquer avec le système d'accès (4) au moyen de couplages de protocole (3), ledit produit de programme de serveur de sélection de service comprenant les fonctions de :
(a) recevoir (100, 101) un signal de sélection de service provenant dudit terminal (1), et
(b) en fonction d'un signal de définition de service, obtenu par ledit serveur de sélection de service (9), générer un signal de configuration et transmettre ledit signal de configuration au dit système d'accès (4) afin de configurer (104) au moins des parties dudit système d'accès (4) et au moins des parties desdits couplages de protocole (3),
**caractérisé en ce que** ledit produit de programme de serveur de sélection de service comprend en outre la fonction de :
(c) générer un signal d'information de service et transmettre (105) ledit signal d'information de service au dit terminal (1) et/ou à ladite interface de couplage (2) pour l'informer des configurations faites dans au moins des parties du système d'accès (4) et dans au moins des parties des couplages de protocole (3), le signal d'information de service définissant un couplage de protocole (3) à utiliser.

12. Terminal (1) pour effectuer un procédé de communication entre ledit terminal (1) et un serveur fournissant des services (6) ou un autre terminal par le biais d'un système d'accès (4) fournissant un accès à un réseau (5), dans lequel le terminal (1) est adapté pour être couplé à une interface de couplage (2) capable de communiquer avec le système d'accès (4) au moyen de couplages de protocole (3), lequel terminal (1) comprend un système processeur de terminal (10) pour commander un émetteur-récepteur de terminal (17) destiné à émettre et recevoir des signaux, ledit terminal système processeur (10) comprenant :
(a) une partie de système processeur de sélection (11) destinée à générer un signal de sélection de service et transmettre (100,101) ledit signal de sélection de service dudit terminal (1) à un serveur de sélection de service (9),
**caractérisé en ce que** ledit terminal système processeur (10) comprend en outre:
(c) une partie de système processeur de réception (12) destinée à recevoir (105) un signal d'information de service provenant dudit serveur de sélection de service (9) pour l'informer sur les configurations faites dans au moins des parties du système d'accès (4) et dans au moins des parties des couplages de protocole (3), le signal d'information de service définissant un couplage de protocole (3) à utiliser, et
(d) une partie de système processeur de communication (13) destinée à communiquer (107, 108) avec ledit serveur fournissant des services (6) ou ledit autre terminal par le biais du couplage de protocole (3) défini par au moins un paramètre de service, laquelle communication (107, 108) comprend un échange des signaux qui comprennent ledit au moins un paramètre de service.

13. Produit de programme de processeur de terminal pour être effectué par le biais d'un système processeur de terminal (10) afin de commander un émetteur-récepteur de terminal (17) pour émettre et recevoir des signaux et pour être utilisé dans un terminal (1) pour effectuer un procédé de communication entre ledit terminal (1) et un serveur fournissant des services (6) ou un autre terminal par le biais d'un système d'accès (4) fournissant un accès à un réseau (5), dans lequel le terminal (1) est couplé à une interface de couplage (2) capable de communiquer avec le système d'accès (4) au moyen de couplages de protocole (3), ledit produit de programme de processeur de terminal comprenant la fonction de :
(a) générer un signal de sélection de service et transmettre (100, 101) ledit signal de sélection de service dudit terminal (1) à un serveur de sélection de service (9),
**caractérisé en ce que** ledit produit de programme de processeur de terminal comprend en outre les fonctions de :
(c) recevoir un signal d'information de service provenant dudit serveur de sélection de service (9) pour l'informer des configurations faites dans au moins des parties du système d'accès (4) et dans au moins des parties des couplages de protocole (3), le signal d'information de service définissant un couplage de protocole (3) à utiliser, et
(d) communiquer (107, 108) avec ledit serveur fournissant des services (6) ou ledit autre terminal par le biais du couplage de protocole (3) défini par au moins un paramètre de service, laquelle communication (107,108) comprend un échange des signaux qui comprennent ledit au moins un paramètre de service.

14. Interface de couplage (2) pour effectuer un procédé de communication entre un terminal (1) et un serveur fournissant des services (6) ou un autre terminal par le biais d'un système d'accès (4) fournissant un accès à un réseau (5), dans lequel l'interface de couplage est adaptée de sorte que le terminal (1) puisse être couplé à ladite interface de couplage (2) et l'interface de couplage est capable de communiquer avec le système d'accès (4) au moyen de couplages de protocole (3), laquelle interface de couplage (2) comprend un système processeur d'interface de couplage (20) pour commander un émetteur-récepteur d'interface de couplage (27) destiné à émettre et recevoir des signaux, ladite interface de couplage système processeur (20) comprenant :
(a) une partie de système processeur d'émission-réception (21) destinée à recevoir un signal de sélection de service provenant dudit terminal (1) et transmettre (100,101) ledit signal de sélection de service à un serveur de sélection de service (9),
**caractérisé en ce que** ledit système processeur d'interface de couplage (20) comprend en outre :
(c) une partie de système processeur de réception (22) destinée à recevoir (105) un signal d'information de service provenant dudit serveur de sélection de service (9) pour l'informer sur les configurations faites dans au moins des parties du système d'accès (4) et dans au moins des parties des couplages de protocole (3), le signal d'information de service définissant un couplage de protocole (3) à utiliser, et
(d) une partie de système processeur de communication (23) destinée à communiquer (107, 108) avec ledit serveur fournissant des services (6) ou ledit autre terminal par le biais du couplage de protocole (3) défini par au moins un paramètre de service, laquelle communication (107, 108) comprend un échange des signaux qui comprennent ledit au moins un paramètre de service.

15. Produit de programme de processeur d'interface de couplage pour être exécuté par le biais d'un système processeur d'interface de couplage (20) afin de commander un émetteur-récepteur d'interface de couplage (27) destiné à émettre et recevoir des signaux et pour être utilisé dans une interface de couplage (2) afin d'effectuer un procédé de communication entre un terminal (1) et un serveur fournissant des services (6) ou un autre terminal par le biais d'un système d'accès (4) fournissant un accès à un réseau (5), dans lequel le terminal (1) est couplé à ladite interface de couplage (2) capable de communiquer avec le système d'accès (4) au moyen de couplages de protocole (3), ledit produit de programme de processeur d'interface de couplage comprenant la fonction de
(a) recevoir un signal de sélection de service provenant dudit terminal (1) et transmettre (100, 101) ledit signal de sélection de service à un serveur de sélection de service (9),
**caractérisé en ce que** ledit produit de programme de processeur d'interface de couplage comprend en outre les fonctions de :
(c) recevoir (105) un signal d'information de service provenant dudit serveur de sélection de service (9) pour l'informer des configurations faites dans au moins des parties du système d'accès (4) et dans au moins des parties des couplages de protocole (3), le signal d'information de service définissant un couplage de protocole (3) à utiliser, et
(d) communiquer (107, 108) avec ledit serveur fournissant des services (6) ou ledit autre terminal par le biais du couplage de protocole (3) défini par au moins un paramètre de service, laquelle communication (107, 108) comprend un échange des signaux qui comprennent ledit au moins un paramètre de service.
